Europäisches Patentamt

(19) European Patent Office

Office européen des brevets

(11) **EP 0 716 498 A1**

## (12) EUROPEAN PATENT APPLICATION
### published in accordance with Art. 158(3) EPC

(43) Date of publication:
**12.06.1996 Bulletin 1996/24**

(21) Application number: **94920600.7**

(22) Date of filing: **23.06.1994**

(51) Int. Cl.$^6$: **H02N 11/00**, H02K 16/00

(86) International application number:
**PCT/RU94/00135**

(87) International publication number:
**WO 95/29530** (02.11.1995 Gazette 1995/47)

---

(84) Designated Contracting States:
**DE GB**

(30) Priority: **26.04.1994 RU 94015479**

(71) Applicants:
 • **BAUROV, Jury Alexeevich**
  **Mytischi 141021 (RU)**
 • **OGARKOV, Vadim Mikhailovich**
  **Kaliningrad, 141070 (RU)**

(72) Inventors:
 • **BAUROV, Jury Alexeevich**
  **Mytischi 141021 (RU)**
 • **OGARKOV, Vadim Mikhailovich**
  **Kaliningrad, 141070 (RU)**

(74) Representative: **Popp, Eugen, Dr. et al**
  **MEISSNER, BOLTE & PARTNER**
  **Postfach 86 06 24**
  **81633 München (DE)**

---

(54) **METHOD OF GENERATING MECHANICAL ENERGY AND EMBODIMENTS OF A DEVICE FOR CARRYING OUT SAID METHOD**

(57) The invention relates to mechanical engineering, in particular the construction of motor (traction) systems for moving objects in space and devices for converting mechanical energy into other forms of energy. Mechanical energy is generated by the creation in the generator of a magnetic field with a vector potential (1) ($\vec{A}$) at an angle of between 90 and 270° to the cosmological vector potential (2) ($\vec{A}_g$); the reduction of the density of the generator magnetic field in a local region of space in an area (4) reduced with values of potential (3) ($\vec{A}_\Sigma$) equal to the sum of the vector potentials indicated; the mounting and rotation in this zone of at least some of the mass of solid bodies (19, 21, 23, 25) which are mechanically linked to mechanical energy consumer devices (49). The solid bodies (19, 21, 23, 25) are first spun about the axes (10, 17) perpendicular to the planes of the vectors of the vector potential (1) ($\vec{A}$) of the mechanical energy generator's magnetic field of the cosmological vector potential (2) ($\vec{A}_g$), until for each of the bodies (19, 21, 23, 25) the moment of the external forces relative to the body's respective center of inertia is equivalent to zero; once this point is reached, the initial spinning action is stopped and the mechanical energy consumer devices (49) are connected to the solid bodies. Embodiments of the proposed device (mechanical energy generators) contain magnetic field sources in the form of axially symmetrical magnet systems (11, 13, 50, 54, 59, 60, 61) and, accommodated therein, solid bodies (19, 21, 23, 25) in the form of rotors mounted so as to rotate and mechanically linked to systems (40) for the initial spinning of the said rotors and to systems by which the rotors are linked to the mechanical energy consumer devices (49); the rotors are designed as rotating bodies whose axes (10, 17) are parallel to the axes of symmetry (10) of the magnet systems.

Schnitt C-C

FIG. 2

EP 0 716 498 A1

## Description

Field of invention

The present invention relates to machine-building and is applicable to engine (thrust) systems intended for moving objects in space and for conversion of energy into its another forms.

Background of the invention

The known method of mechanical energy generation intended for moving an object (load) in space comprise creating in the generator magnetic field with vector potential oriented at an angle of 90°-270° relative to the cosmological vector potential, and displacing in said magnetic field bodies, which bodies are mechanically joined to the object (load), into a region of reduced values of the potential equal the sum of said vector potentials.

The device for carrying out this method, i.e. the mechanical energy generator, includes a magnetic source in the form of toroidal coil, bodies positioned in the inner cavity of said coil and drive mechanisms for the purpose of varying positions of the bodies relative to the coil surface. The said mechanisms may be designed as tie-rods fastened rigidly to the frame of the object (load) and uniformly positioned along the coil surface; said tie-rods are provided with drives for moving them radially in planes of toroid axial cross-sections. (See:

Ю. А. Бауров, Б. М. Огарков, "Способ перемещения объекта в пространстве и устройство для его осуществления" (Yu. A. Baurov and V. M. Ogarkov, "Method of moving object in space and its embodiment").

Russian patent, N 2023203 filed 11.11.90; international application N PCT/RU92/00180 filed 30.09.92).

In space region with reduced values of summed vector potential an asymmetric substance distribution takes place which, in accordance with theoretical notions and corroborating them experimental data, will lead to the appearance of a force acting on the bodies positioned in said space region and moving them and, as a consequence, the object joined to them by tie-rods, in space. (See, for example,

Ю. А. Бауров, Е. Ю. Клименко, С. И. Новиков, "Экспериментальное наблюдение магнитной анизотропии пространства" (Yu. A. Baurov, E. Yu. Klimenko, S. I. Novikov, "Experimental observation of space magnetic anisotropy")

Doklady Akademii Nauk SSSR, 1990, v.315, N 5, p.p.1116-1120; Yu.A. Baurov, E.Yu.Klimenko, S.I.Novikov, "Experimental observation of space magnetic anisotropy", Physics Letters A 162 (1992), p.p.32-34, North-Holland;

Ю.А.Бауров, П.М.Рябов, "Экспери-
ментальные исследования магнитной анизотропии пространства
с помощью кварцевых пьезорезонансных весов" (Yu.A.Baurov,
P.M.Ryabov, "Experimental investigations of space magnetic
anisotropy with the aid of quartz-piezoresonance balance")

Doklady Akademii Nauk, 1992, v.326, N 1, p.p.73-77).

One disadvantage of the method-propotype lies in a relatively low value of the force acting on the object and, consequently, the low value of generated energy and significant power losses as well.

The device realizing the said method is rather complicated in design; for power take-off there from (with the purpose of joining to it another consumers and/or for converting energy into its another forms,for example, into electric power) complicated additional devices and control systems are necessary.

Disclosure of the invention

An object of the present invention is to provide such a structure of a mechanical energy generator which would be distinguished by lower generation losses and by uprated power in comparison with the prototype, and by method of generation, too.

The solution of the stated problem is achieved by means of:

- providing in the generator the magnetic field with vector potential oriented at an angle of 90°-270° relative to the cosmological vector potential;

- reducing magnetic induction of the generator in a local space zone with lowered values of summed vector potential equal the sum of generator one and of the cosmological one;

- positioning in said local zone, at least partially, the material bodies and driving them initially up to speed about axes perpendicular to the planes wherein the generator vector potential and the cosmological one are laying, up to reaching by each of the bodies the regime of zero moment of all external forces with respect to the center of inertia of each body, and thereafter removing the initial torque and joining power consumers to said rotaiting bodies;

- reducing the magnetic induction in said local zone of space by means of concentration and closure of magnetic lines of force outside said zone, or by means of superimposing several magnetic fields with differently directed magnetic induction vectors, in particular, by superimposing two axially symmetric oppositely directed magnetic field;

- rotating said bodies by revolving them around a surface envelopping the space region with minimum summed vector potential being equal to the sum of generator and cosmological ones.

In accordance with the first embodiment of the generator it include

- a magnetic system made as an axially symmetrical magnetic source with a core in the form of pole pieces mounted on the poles; said pole pieces being extended radially relative to the axis of magnetic source and being joined together periferically;

- the bodies in the form of rotors joined mechanically to systems of drive them initially up to speed and to mechanical energy consumers; the said rotors being made as bodies of revolution positioned, at least partially, in an interspace between the side surface of the magnetic source and the peripherical pole pieces joint elements of the magnetic system, while rotors axes are parallel to the axis of symmetry of the magnetic source, which is in the form of constant cylindrical magnet with axial magnetization or in the form of solenoidal current coil, therewith the pole pieces being made as hollow magnet cores arranged coaxially with magnetic source or as set of magnet core rods at the periphery of the pole pieces; the rotor axes being positioned in the interspace between the side surface of the magnetic source and the joint elements of the magnet system pole pieces, or those axes being arranged on the axis of symmetry of the magnetic source, while said rotors or at least part of them are in the form of rings around the outside surface of said magnetic source.

In accordance with the second embodiment of the present invention:

- the generator of mechanical energy includes a magnet system in the form of two coaxial solenoids having the axial symmetry and material bodies made as rotors joined mechanically to systems of initial drive them up to speed and to mechanical energy consumers as well; said rotors being in the form of bodies of revolution around the axes parallel with the axis of symmetry of solenoids;
- the axes of said rotors are arranged at the outside of the external solenoid or on the axis of symmetry of solenoids;
- said rotors or at least part of them are made as rings around the external solenoid.

In accordance with the third embodiment of the present invention:

- the generator of mechanical energy is provided with rotors axes of which are arranged in the outer space of toroid side surface or pass through the centre of axial cross-section of toroid;
- the toroidal coil is in the form of circular toroid or in the form of separate straight sections changes of which are cased with transition curvilinear adapters;
- the said rotors or at least part of them are made as rings around the toroid in planes of axial cross-sections of the toroid.

In either construction of mechanical energy generator the rings are made as separators with additional rotors arranged therein, the outer surfaces of which additional rotors being in engagement with the outher side surface of the generator magnetic source (a permanent magnet, a solenoid, a toroid). Said additional rotors are in the form of cylinders with the axes fastened in the separator with the possibility of rotation of said rotors.

To mechanical engagement of additional rotors with the magnetic source outside surface a gears engagement one a friction one may be used. All the mass of the rotors or at least part of it is made of substance with density no less than $8000 kg/m^3$, e.g. of tantalum.

In operation the said bodies are initially driven up to speed up to the regime of free inertial rotation characterized by zero turning moment, but the mechanical force arising in the space region with reduced values of the said summed vector potential as a result of substance nonuniformity accelerates the rotation, and the mechanical energy generated therewith may be removed from rotors and be transferred to consumers, for example, to electrogenerators or to rotating elements of vehicles, which process is maintained in the effective manner with the proposed embodiments of generator construction, since energy losses due to rotational effects of electrically conducting bodies in the magnetic field may be totally excluded or minimized.

The present invention is consistent with following PCT criteria of patentability:

- the criterion of novelty, because the proposed technical solution can not be learned from the present-day level of technology, i.e. there are no generally available data about analogs (to the date of priority);
- the criterion of inventor's level, as the proposed invention is not obvious, for those skilled in the art, from the present-day level of technology, and is based on novel physical principles and phenomena;
- the criterion of industrial applicability, as there is an experimental evidence of existence of new physical phenomena, whereon the invention being based, as of an action of thereby arising forces on material bodies (see, for example,

Ю.А.Бауров, П.М.Рябов, "Экспериментальные исследования магнитной анизотропии пространства с помощью кварцевых пьезорезонансных весов" (Yu.A.Baurov,P.M.Ryabov, "Experimental investigations of space magnetic anisotropy with the aid of quartz-piezoresonance balance")

Doklady Akademii Nauk, 1992, v.326, N 1, p.p.73-77; Yu.A.Baurov "Space magnetic anisotropy and new interaction in nature", Physics Letter A 181 (1993), p.p.283-288, North-Holland).

Description of drawings

The essence of the present invention is explaned in more detail with reference to the accompanying drawings in which:

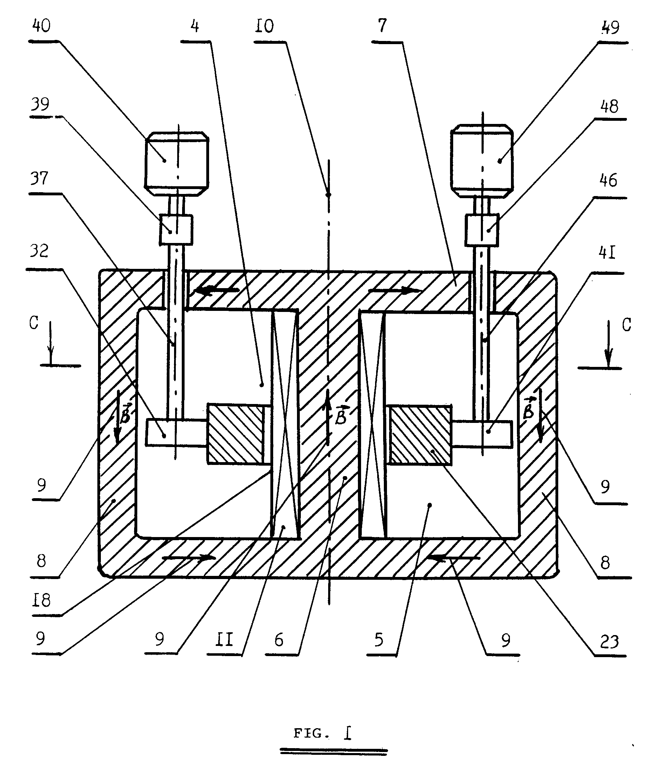

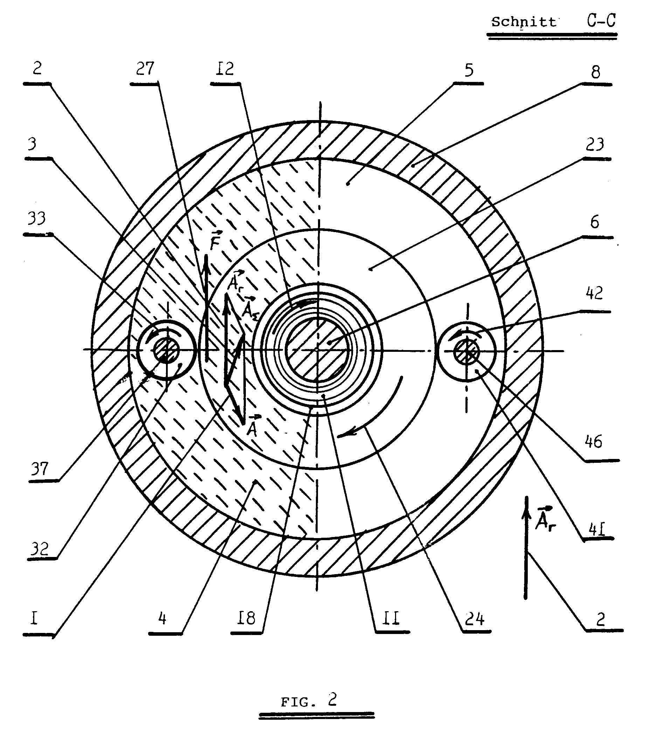

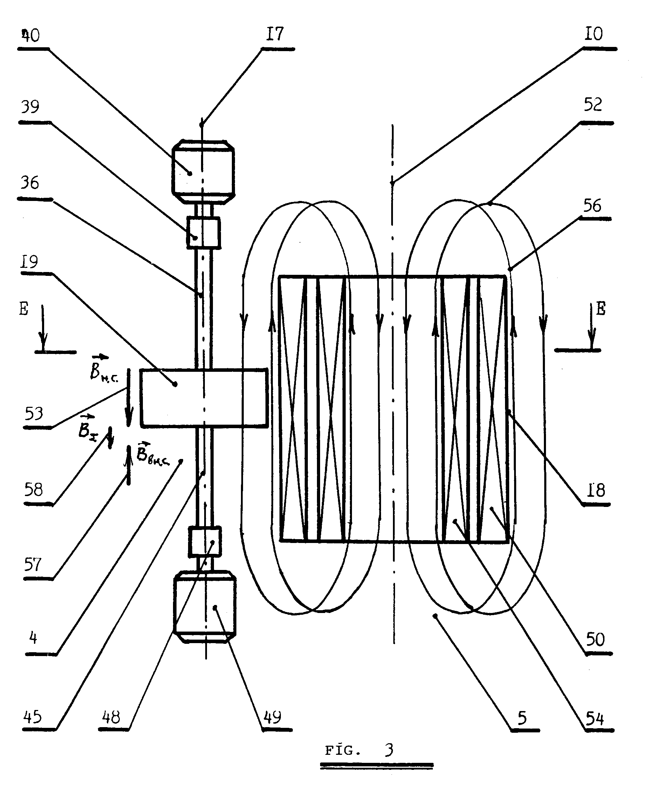

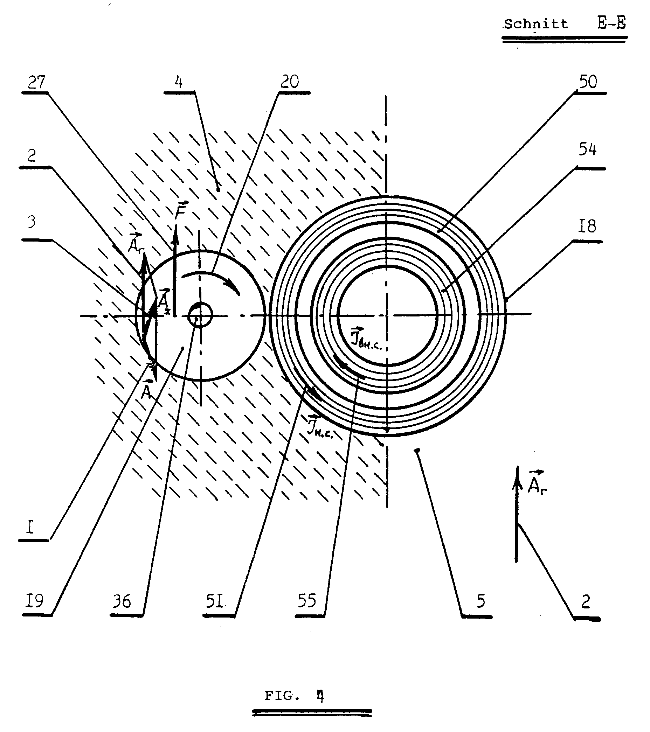

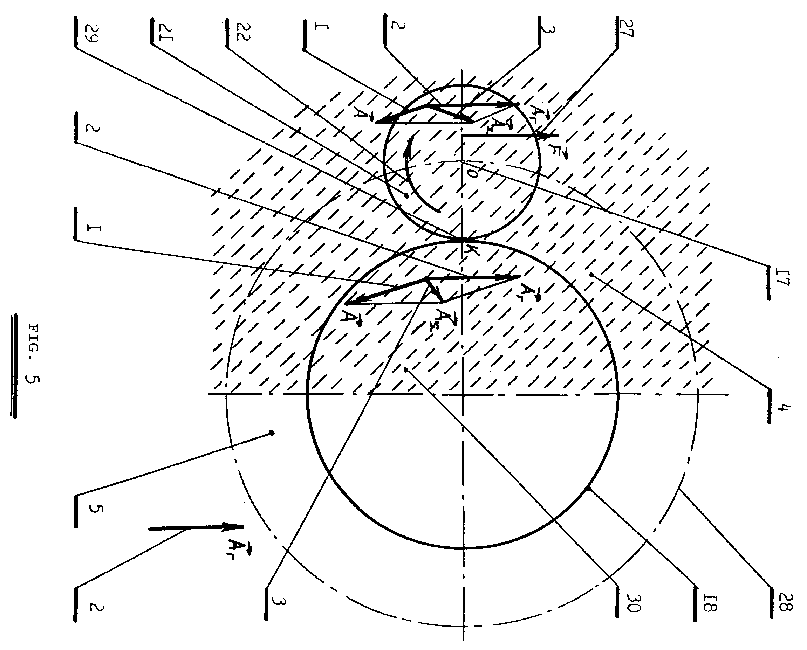

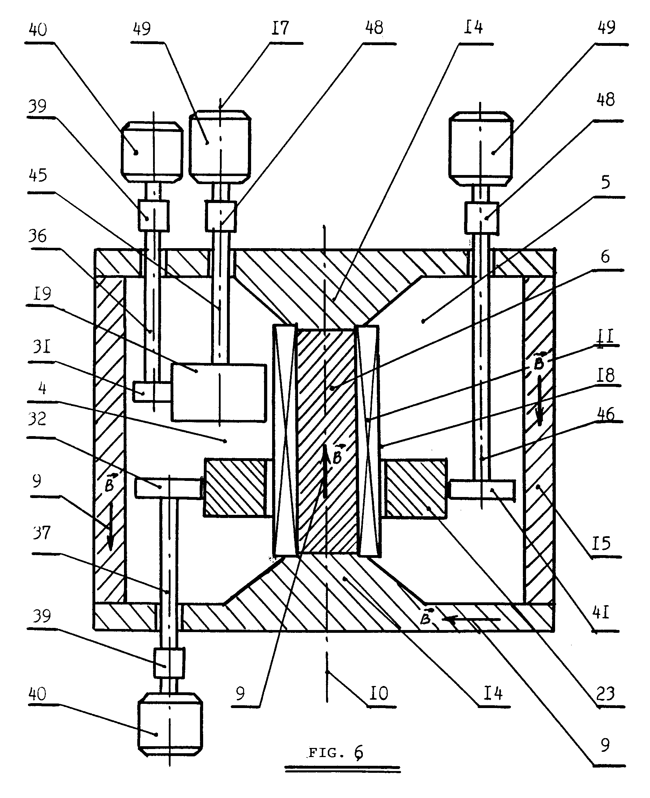

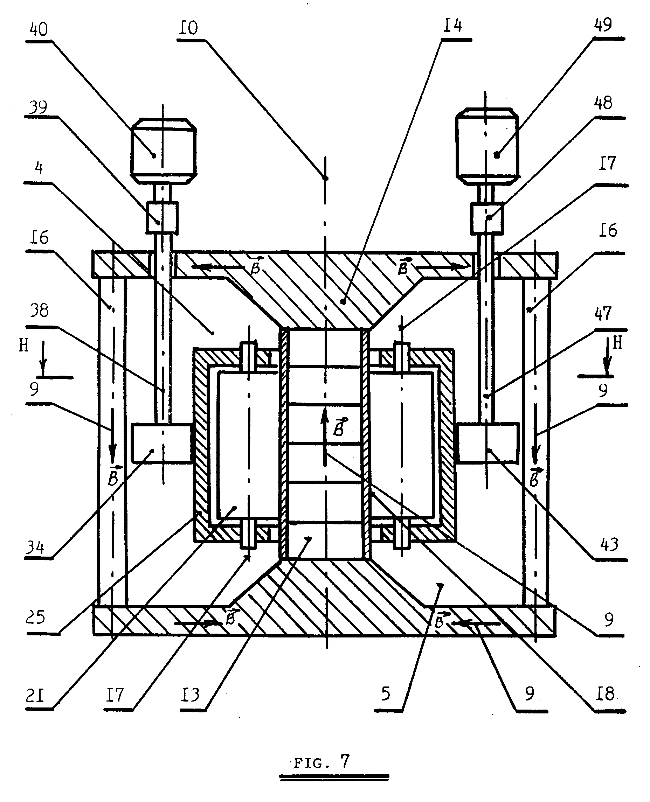

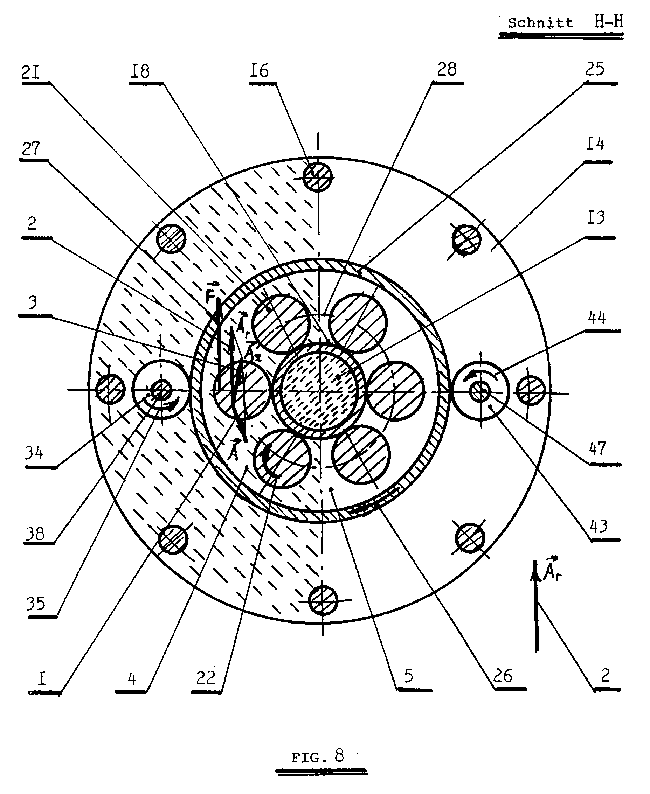

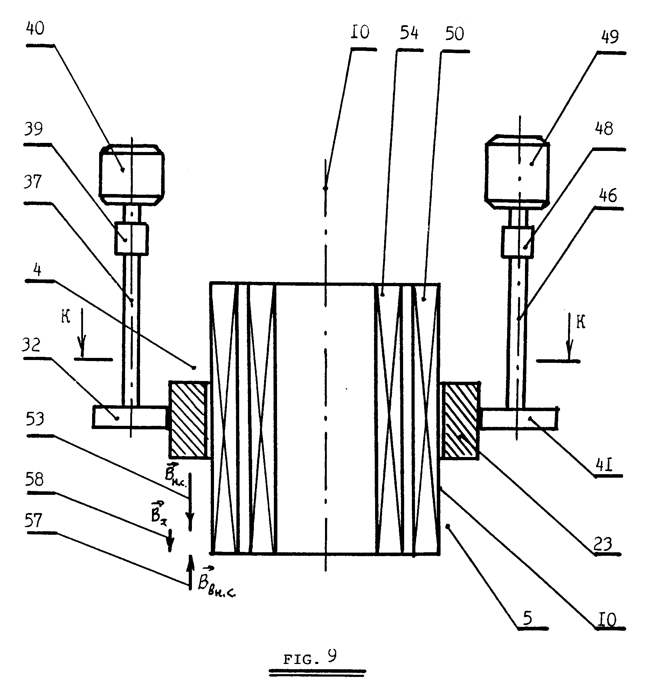

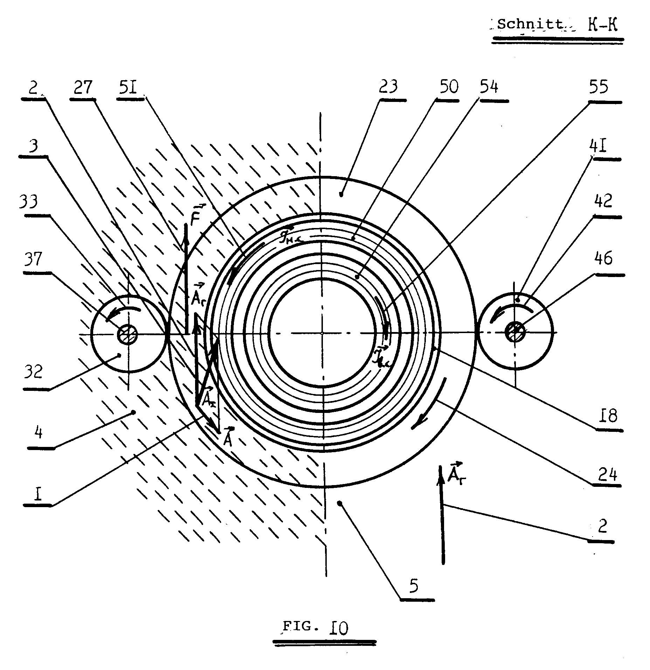

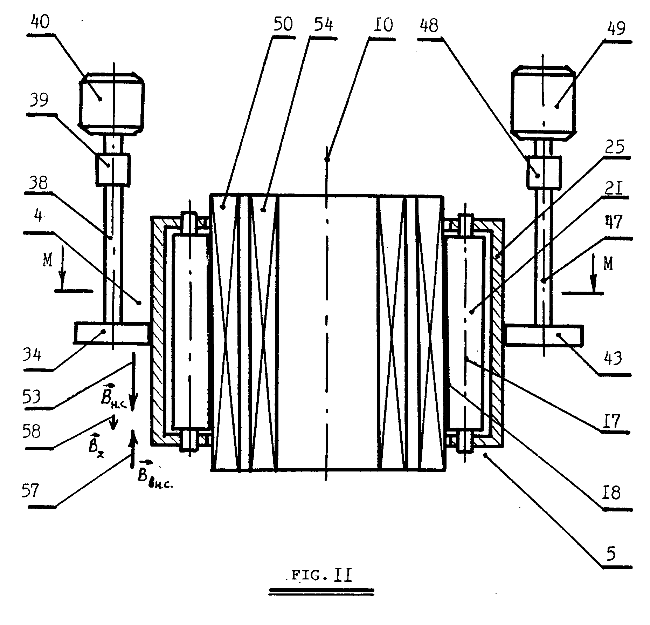

FIG.1 is a schematic diagram of one of possible constructions embodying features of the proposed method where the mechanical energy generator has an axially symmetrical magnetic source in the form of solenoidal current coil with a rotor made as the ring placed around the outside surface of said magnetic source; the axis of the rotor is arranged on the axis of symmetry of said magnetic source; the axis of the rotor is arranged on the axis of symmetry of said magnetic source, and a part (a half) of mass of the said rotor-ring is disposed in the space region with reduced values of vector potential being equal to the sum of the cosmological vector potential and the generator one;

FIG.2 is a section view taken along line C-C of Fig.1 with the illustration of relative position of the magnetic vector potential of the generator, of the cosmological vector potential and of the vector of force acting on a material body ( a rotor-ring) and rotating it;

FIG.3 is a schematic diagram of another embodiment of the proposed method where, in accordance with p.14 of Claims, the mechanical energy generator is provided with an axially symmetrical magnetic source made in the form of two coaxial solenoids with oppositely oriented magnetic fields (see p.4 of Claims) and with a rotor in the form of cylinder (disc) disposed outside the surface of the external magnetic solenoid, all the mass of rotor (disc) being positioned in the space region with reduced values of the summed vector potential;

FIG.4 is a section view of the generator taken along line E-E of Fig.3 with the illustration of relative position of the generator magnetic vector potential, of the cosmological one and of the vector of force acting on a material body (rotor-disc) and rotating it;

FIG.5 is a schematic diagram of that embodiment of the proposed method wherein rotation of bodies in the generator is carried out through revolving thereof around the surface envelopping the above mentioned space region with the minimal summed vector potential (see p.5 of Claims);

FIG.6 is a schematic diagram of the first embodiment of the mechanical energy generator with magnetic source in the form of cylindrical axially symmetrical magnet system made as a solenoidal current coil outside which and in accordance with p.p.6-8 of Claims the rotors are deposited, one of which is a cylindrical disc with the axis arranged in an interspace between the side surface of magnetic source and the peripherical joint elements of magnet system pole pieces (in accordance with p.11 of Claims), while another one one of rotors is made in the form of a ring enclosing the outer side surface of the generator magnetic source (see p.p. 12,13 of Claims);

FIG.7 is a schematic structural diagram of first embodiment of mechanical energy generator with cylindrical axially symmetrical magnet system built up as set of axially magnetized constant magnets (see p.p.6,7 of Claims), out of which rotors are deposited, one of those rotors being made as an annular separator with mounted thereon additional rotors in the form of cylindrical rollers fastened in the separator with the possibility of rotation, the outer surface of said rollers being mechanically engaged with the outer side surface of the generator magnet source (see p.p.23,24 of Claims);

FIG.8 shows a sectional view taken along line H-H of Fig.7 with the indication of relative position of the generator vector-potential, of cosmological one and of the vector of force acting on material body (rotor-roller) and rotating it;

FIG.9 is a schematic structural diagram of the second embodiment of proposed energy generator with an axially symmetrical magnetic source in the form of two coaxial solenoids (see p.14 of Claims) with oppositely oriented magnetic induction vectors (p.4 of Claims), and with a rotor in the form of a ring enclosing the external solenoid (p.p.16,17 of Claims); part of the mass of said rotor-ring being positioned in the space region with reduced values of above mentioned summed vector potential (according to p.1 of Claims);

FIG.10 shows a section of the generator along line K-K of Fig.9 with indication of relative position of the generator magnetic vector potential, of the cosmological one and of the vector of the force acting on body;

FIG. 11 is a schematic structural diagram of the second embodiment of the proposed generator with an axially symmetrical magnetic source as in the Fig.9 and with a rotor made as an annular separator having thereon arranged additional rotors made in the form of cylinders-rollers which are fastened in the separator with the possibility of rotation; the outer surfaces thereof being engaged mechanically with the outer side surface of generator magnetic source (see p.p.23,24 of Claims);

FIG.12 is a section view of the generator taken along line M-M of Fig.11 with indication of relative position of above mentioned three vectors;

FIG.13 is a schematic structural diagram of the third embodiment of the proposed generator with magnetic system in the form of toroidal current coil (according to p.18 of Claims) and with a rotors-discs positioned out of side. surface of toroid (see p.20 of Claims);

FIG.14 shows a section of the generator along line P-P of Fig.13 with indication of relative position of above mentioned three vectors;

FIG.15 is a schematic structural diagram of the third embodiment of the mechanical energy generator with magnetic system as toroidal current coil (in accordance with p.18 of Claims) and with rotors made in the form of rings enclosing the said toroid in axial cross-sectional planes thereof (see p.p.21,22 of Claims); part of mass of at least one rotor-ring being disposed in the space region with reduced values of above mentioned summed vector potential (see p.1 of Claims);

FIG.16 shows a section of the generator along line T-T Fig.15 with indication of relative position of magnetic vector potential of the generator, the cosmological vector potential and the vector of force acting on material body (rotor-ring) and fotating it;

FIG.17 is a schematic structural diagram of the third embodiment of proposed mechanical energy generator, the toroidal current coil of which is in the form of separate straight sections the changes therebetween are eased with transition curvilinear adapters in according to p.19 of Claims while the rotors are made as annular separators having mounted thereon additional rotors in the form of cylinders-rollers being fastened in said separator with the possibility of rotation and being engaged mechanically with the outer side surface of magnetic source (in accordance with p.p.23,24 of Claims);

FIG.18 shows a section of the generator along line X-X of Fig.17 with indication of relative position of above mentioned three basic vectors.

Referring now to the drawings there are shown:

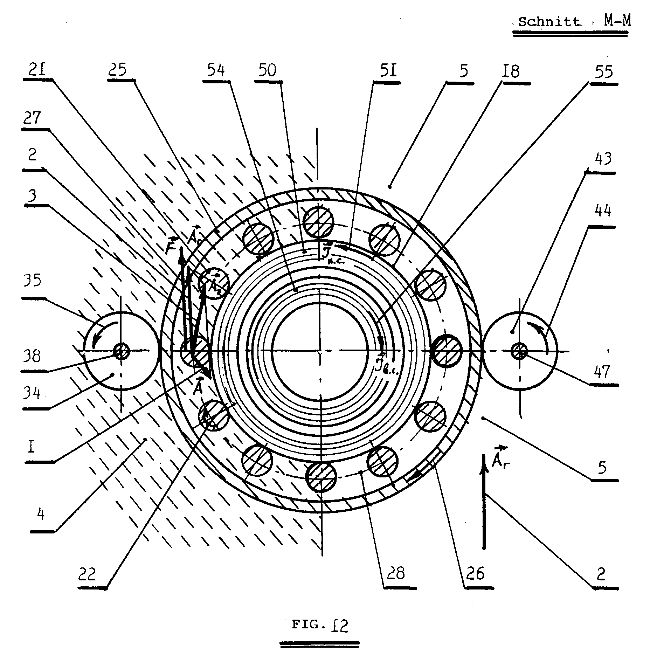

1 - magnetic vector potential ($\mathbf{A}$) of the mechanical energy generator, which is indicated in Fig. 2, 4, 5, 8, 10, 12, 14, 16, 18;

2 - the cosmological vector potential ($\mathbf{A}_\Gamma$) (Fig.2, 4, 5, 8, 10, 12, 14, 16, 18);

3 - the summed vector potential ($\mathbf{A}_\Sigma$) being equal to the sum of magnetic vector potential 1 $\mathbf{A}$ of generator and cosmological vector potential 2 ($\mathbf{A}_\Gamma$) (Fig.2, 4, 5, 8, 10, 12, 14, 16, 18);

4 - the space region with lowered values of the summed vector potential 3 ($\mathbf{A}_\Sigma$) (Fig.1-18);

5 - the space region with unchanged constant summed potential being equal to the cosmological potential 2 ($\mathbf{A}_\Gamma$) (Fig.1-18);

6 - a core of closed magnetic circuit (Fig.1, 2, 6);

7 - a radial part of closed circuit (Fig.1);

8 - a peripherical part of closed magnetic circuit (Fig.1, 2);

9 - magnetic induction vector ($\mathbf{B}$) of a generator magnet system with closed magnetic circuit (Fig.1, 6, 7);

10 - an axis of symmetry of the generator magnetic source (Fig.1, 3, 6, 7, 9, 11, 13, 15, 17);

11 - a magnetic source of solenoidal type (Fig.1, 2, 6);

12 - direction of current I in the solenoid 11 (Fig.2);

13 - a magnetic source in the form of cylindrical constant magnet being magnetized axially (Fig.7,8);

14 - a pole piece of magnetic circuit in the first constructional embodiment of mechanical energy generator (Fig.6, 7, 8);

15 - a magnetically conducting hollow cylinder (Fig.6);

16 - a magnetically conducting rode (Fig.7,8);

17 - axis of rotation of a material body (rotor-disc 18, rotor-roller 21) oriented perpendicularly to the plane in which the vectors of magnetic potential 1($\mathbf{A}$) and of cosmological potential 2 ($\mathbf{A}_\Gamma$) are lying, said axis being arranged out of side surface 18 of the magnetic source (Fig.3,5,6,7,11,13,17);

18 - side surface of the magnetic source which side surface limits the space region 30 having minimal summed potential 3 ($\mathbf{A}_\Sigma$) (Fig.1-18);

19 - a material body as rotor made in the form of cylindrical disc (Fig.3,4,6,13,14);

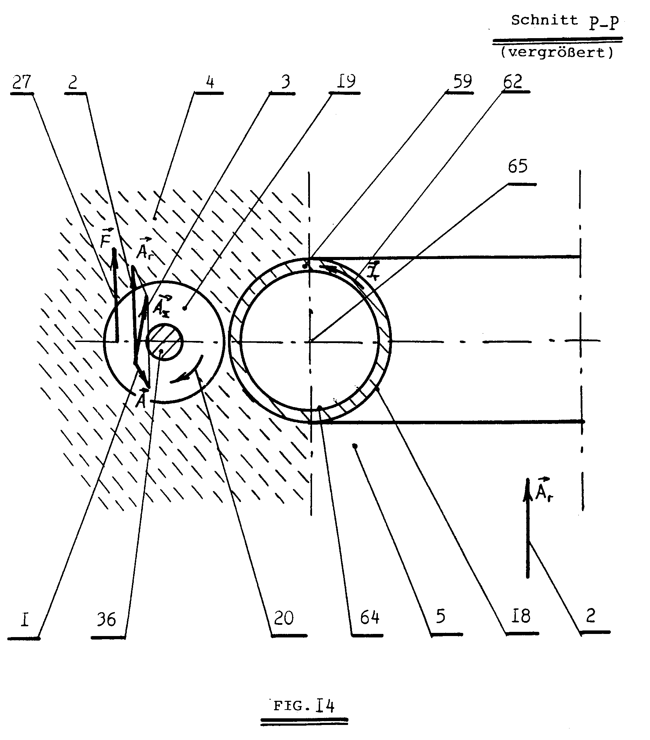

20 - direction of rotation of the rotor-disc 19 (Fig.4,14):

21 - a material body as rotor made in the form of cylindrical roller installed with the possibility of rotation in the separator 25 (Fig.7,8,11,12,17,18);

22 - direction of rotation of the rotor-roller (Fig.8,12,18);

23 - a material body (rotor) as a ring enclosing outer side surface 18 of the generator magnetic source (Fig.1,2,6,9,10,15,16);

24 - direction of rotation of rotor-ring 23 (Fig.2,10,16);

25 - a material body (rotor) in the form of cylindrical disc-separator (Fig.7,8,11,12,17,18);

26 - direction of rotation of said rotor-separator 25 (Fig.8,12,18);

27 - the summed mechanical force arising in the region 4 of lowered values of summed potential 3 ($\mathbf{A}_\Sigma$) and rotating the material bodies (rotors) 19,21,23,25 (Fig.2,4,5,8,10,12,14,16,18);

28 - a trajectory of movement of points on the rotation axis 17 of the material body (rotor-roller 21) during its revolving around the surface 18 enclosing the space region 30 with minimal summed potential 3 ($\mathbf{A}_\Sigma$) (see Fig.5) as well as aligned with that trajectory circumference thereon axes 17 of rotors-rollers 21 in the rotor-separator 25 being arranged (Fig.8,12,18);

29 - a momentary axis (point K) of rotation of the material body (rotor-roller 21) during its revolving around the surface 18 enclosing the space region 30 with minimal summed potential 3 ($\mathbf{A}_\Sigma$) (Fig.5);

30 - the space region with minimal summed potential 3 ($\mathbf{A}_\Sigma$) (Fig.5);

31 - a disc for driving up the rotor-disc 19 (Fig.6);

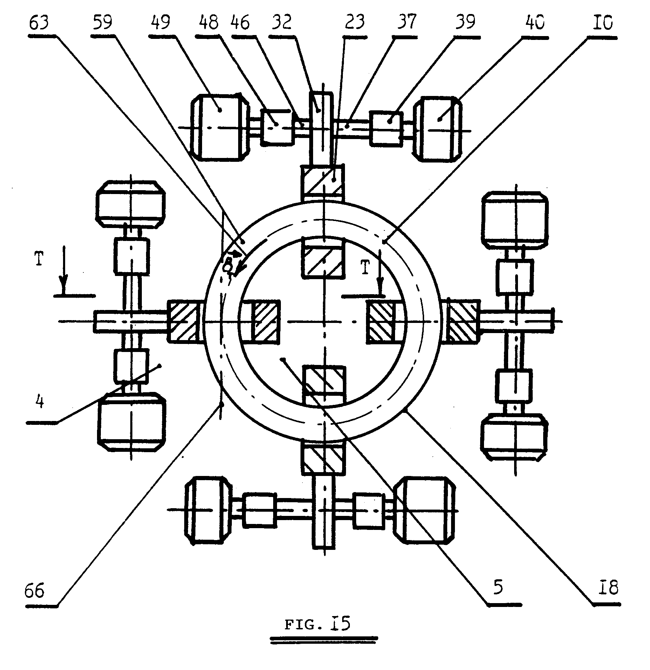

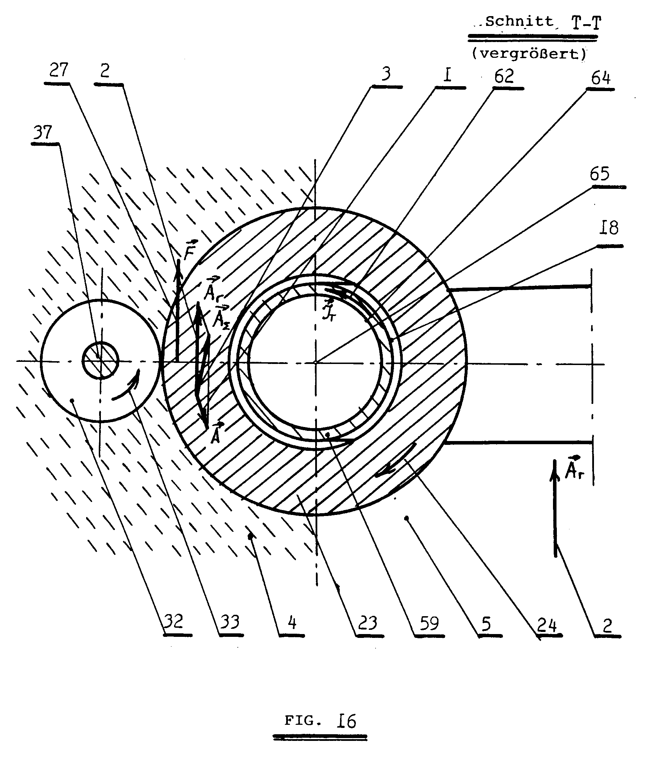

32 - a disc for driving up the rotor-ring 23 (Fig.1,2,6,9,10) and at the same time for mechanical joint thereof with a consumer 49 of mechanical energy (Fig.15,16);

33 - direction of rotation of the disc 32 (Fig.2,10,16);

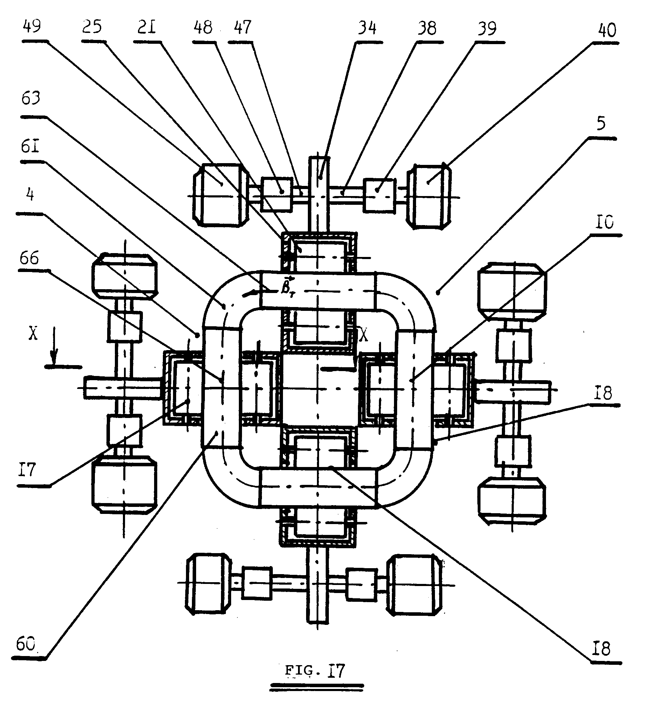

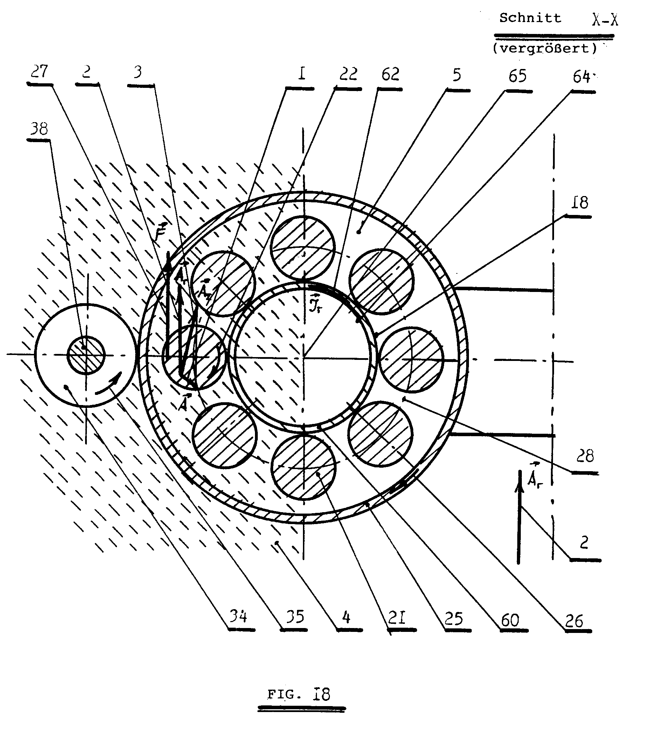

34 - a disc for driving up the rotor-separator 25 (Fig.7,8,11,12) and at the same time for mechanical joint thereof with a consumer 49 of mechanical energy (Fig.17,18);

35 - direction of rotation of the disc 34 (Fig.8,12,18);

36 - the shaft of the disc 31 for driving up the rotor-disc 19 (Fig.6,13,14);

37 - the shaft of the disc 32 for driving up the rotor-ring 23 (Fig.1,2,6,8,10,15,16);

38 - the shaft of the disc 34 for driving up the rotor-separator 25 (Fig.7,8,11,12,17,18);

39 - a clutch of the system 40 of initial driving up rotors 19,23,25 (Fig.1,3,6,7,9,11,13,15,17);

40 - a system of initial driving up rotors 19, 23, 25 (Fig.1,3,6,7,9,11,13,15,17);

41 - a disc for the mechanical joint of rotor-ring 23 with the consumer 49 of generated mechanical energy (Fig.1,2,6,9,10);

42 - direction of rotation of the disc 41 (Fig.2,10);

43 - a disc for the mechanical joint of rotor-separator 25 with the consumer 49 of generated mechanical energy (Fig.7,8,11,12);

44 - direction of rotation of the disc 43 (Fig.8,12);

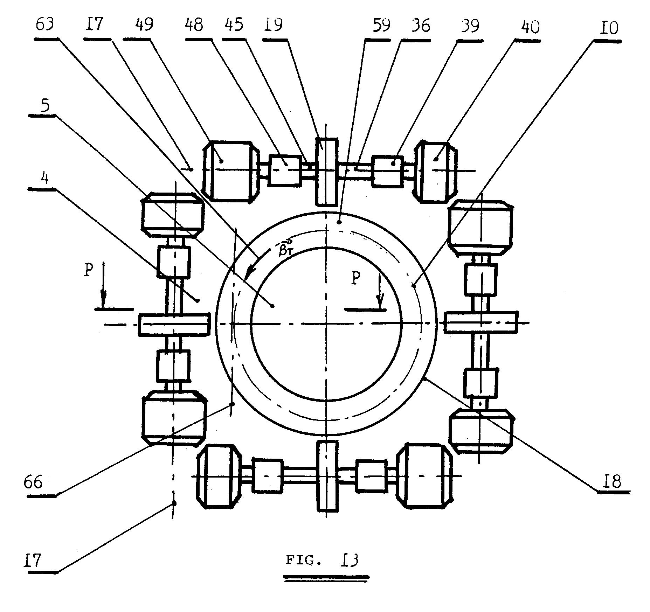

45 - the shaft for the mechanical joint of rotor-disc 19 with the consumer 49 of generated mechanical energy (Fig.6,13);

46 - the shaft of the disc 41 (Fig.1,2,6,9,10) and of the disc 31 (Fig.15) for the mechanical joint of rotor-ring 23 with the consumer 49 of generated mechanical energy;

47 - the shaft of the disc 43 (Fig.7,8,11,12) and the disc 34 (Fig.17) for the mechanical joint of rotor-separator 25 with the consumer 49 of generated mechanical energy;

48 - a clutch of the consumer 49 of generated mechanical energy (Fig.1,3,6,7,9,11,13,15,17);

49 - the consumer of generated mechanical energy (Fig.1,3,6,7,8,11,13,15,17);

50 - the external solenoid of the magnetic source (Fig.3,4,9-12);

51 - direction of current $I_{H.C.}$ in the external solenoid 50 (Fig.4,10,12);

52 - magnetic lines of force of the external solenoid 50 (Fig.3);

53 - vector $B_{H.C.}$ of magnetic induction of external solenoid Fig.3,9,11);

54 - the internal solenoid of magnetic source (Fig.3,4,9-12);

55 - direction of current $I_{BH.C.}$ in the internal solenoid 54 (Fig.4,10,12);

56 - magnetic lines of force of the internal solenoid 54 (Fig.3);

57 - vector $B_{BH.C.}$ of magnetic induction of the internal solenoid 54 (Fig.3);

58 - vector $B_{\Sigma}$ of summed magnetic induction of the external solenoid 50 and of the internal one 54 (Fig.3,9,11);

59 - the toroidal current coil (Fig.13-16);

60 - a straight section of toroidal current coil (Fig.17,18);

61 - a curvilinear adapter of toroidal current coil (Fig.17);

62 - direction of current $I_T$ in toroidal current coil 59 (in its sections 60,61) (Fig.14,16,18);

63 - vector $\mathbf{B}_\Gamma$ of magnetic induction of toroidal current coil 59 (of its sections 60,61) (Fig.13,15,17);

64 - the forming circumference of toroid 59 (of its sections 60,61) (Fig.14,16,18);

65 - the center of forming circumference 64 of toroid 54 (of its sections 60,61) (Fig.14,16,18);

66 - a tangent line to axis 10 of symmetry of toroid 59 (Fig. 13,15,17).

Embodiments of the invention

The proposed method of generating mechanical energy is realized in the process of operation of its three embodiments (generators of mechanical energy).

In the first embodiment said generator (Fig.6-8) include:

- a magnetic system made in the form of axially symmetric magnetic source (solenoidal current coil 11 of Fig.6) or in the form of permanent axially magnetized cylindrical magnet (Fig.7,8) with magnetic circuit in the form of pole pieces 14 situated at the poles 11 or 12 of magnetic source, which pole pieces are extended radially relative to the axis 10 of said magnetic source 11,13 and are joined peripherically with the aid of magnetically conductive hollow cylinders 15 (of Fig.6) or with the aid of the set of magnetically conductive rods 16 (of Fig. 7,8), and
- material bodies as rotors, axes 17 of which are arranged in parallel to the axis 10 of symmetry of magnetic force 11,13 and are situated in the interspace between side surface thereof and the elements 15 or 16 joining to each other peripherically the pole pieces 14, in that latter case said material bodies are in the form of cylindrical discs 19 (of Fig.6) or of rollers 21 (of Fig.7,8) or, alternatively, axes 17 of rotors are arranged on the axis 10 of symmetry of magnetic source 11,13.

In latter case each material body (rotor) may be in the form of a ring 23 enclosing outer side surface 18 of magnetic source 11,13 (of Fig.6), or, accordingly to Fig.7,8, as an annular separator 25 that enclose the outer side surface of magnetic source and separates from each other cylildrical rollers 21, axes 17 thereof being arranged on the circumference 28 and which rollers being thrown into mechanical (frictional or gears) engagement with said outer side surface 18 of magnetic source 11,13.

As materials for manufacturing the bodies (discs 19, rollers 21, rings 23, separators 25) or, at least, a part of their mass, substances are used with sufficiently high density, no less than 8000 kg/m$^3$, selected, for example, from the set: brass, copper, molyodenum, lead, tantalum, tungsten etc.

The material bodies (rotors) 19,21,23,25 are joined mechanically with the aid of discs 31,32,34, shafts 36,37,38 (in correspondence) and clutches 39 to the systems 40 of initial drive up to speed of said rotors, for example, to electric motors, and with the aid of discs 41,43 (or, alternatively, directly), shafts 45,46,47 and clutches 48 they are mechanically joined to consumers 49 of generated mechanical energy, for example, to electrical generators.

In the second embodiment of the proposed method the generator of mechanical energy, in accordance with Fig.3-4, 9-12, comprise a magnetic system in the form of two coaxial solenoids 50,54 and material bodies as rotors with the axes 17 arranged in parallel with the axis 10 of symmetry of magnetic solenoids 50,54 and situated either outside of the external solenoid 50, in which case the material bodies being made as cylindrical discs 19 (of Fig.3,4), or as rollers 21 (of Fig.11,12) or on the axis 10 of symmetry of magnetic source.

In latter case each material body (rotor) may be made either as a ring 23 enclosing the outer side surface 18 of magnetic source which is composed of two solenoids 50,54 (of Fig.9,10), or as an annulur separator 25 enclosing the outer side surface of magnetic source (see Fig.11,12), which separator separate from each other cylindrical rollers 21 axes 17 of which being arranged on the circumference 28 and being thrown in mechanical engagement (frictional or gears) with the outer side surface 18 of the magnetic source.

As materials for manufacturing bodies (discs 19, rollers 23, separators 25) or, at least, part of mass of them, substances with sufficiently hygh density, no less then 8000kg/m$^3$, for example, selected from the set: brass, copper, molybdenum, tantalum, lead, tungsten etc. are used.

The material bodies (rotors) 19,21,23,25 are joined mechanically with the aid of discs 31,32,34, shafts 36,37,38 (in correspondence) and clutches 39 to the systems 40 of initial drive up of said rotors, for example, to the electric motors and with the aid of discs 41,43 (or directly, see Fig.3) shafts 45,46,47 and clutches 48 they are joined mechanically to consumers 49, for example, electric generators.

In the third embodiment of the proposed method the generator of mechanical energy (Fig.13-18) comprise a magnetic system as toroidal current coil 59 which coil, in it's turn, may be in the form of separate straight section 60 the changes therebetween being eased with transition curvilinear adapters 61, and material bodies situated outside of toroid 59 and made in the form of rotors axes 17 thereof being perpendicular to the planes of axial cross-sections 64 of toroid 59, or it's, sections 60,61, and either being positioned outside of toroid 59 (it's sections 60,61), in latter case the material bodies are in the form of cylindrical discs 19 (of Fig.13,14) or in the form of rollers 21 (of Fig.17,18), or said bodies going through the centre 65 of forming circumference 64 of toroid 59 (of it's section 60,61).

In the last mentioned case each material body (rotor) may be made as ring 23 enclosing 59 (it's sections 60,61) in the planes of forming circumference 64 of said toroid (see Fig.15,16), as well as in the form of an annular separa tor 25 enclosing the toroid (see Fig.17,18) and separating from each other cylindrical rollers 21, axes 17 of which are arranged on the circumference 28 and are thrown in mechanical engagement (frictional or gears) with outer side surface 18 of toroidal current coil (of it's section 60,61).

As materials for manufacturing the bodies (discs 19, rollers 21, rings 23, separators 25) or, at least, part of their mass, substances with sufficiently high density, no less than 8000 kg/m$^3$, are used, for example, selected from the set: brass, copper, molybdenum, tantalum, lead, turigsten etc.

The bodies (rotors 19,21,23,25) are joined mechanically with the aid of discs 31,32,34, shafts 36,37,38 and the clutches 39, in correspondence, to the systems 40 of initial drive them up to speed, for example, to electric motors, and with the aid of discs 41,43 (or directly, - see Fig.13,15,17), shafts 45,46,47 and clutches 48 they are joined mechanically to consumers 49 of generated mechanical energy, e.g. to electric generators.

Industrial applicability.

In industrial use of the present invention the generation of mechanical energy comes as follows.

In the generator of mechanical energy magnetic field is created for example, by passing electric current **I** (see p.12 of Fig.1,2) through a solenoidal coil of magnetic source 11, vector potential thereof oriented at an angle of 90-270° relative to the cosmological vector potential 2 ($\mathbf{A}_\Gamma$), which vector potential has the same direction in the vicinity of the Sun as of the nearest stars. As a result of summation of vector potentials 1 (**A**) and 2 ($\mathbf{A}_\Gamma$) (see vector diagrams in Fig.2,4,5,8,10,12,14,16,18) in some region of a zone 4 with lowered summed potential 3 ($\mathbf{A}_\Sigma$) is established (being section-lined in Fig.2,4,5,8,10,14, 16,18). (It should be noted that graphically illustrated summation of the vector 1 (**A**) and 2 ($\mathbf{A}_\Gamma$) in Fig.2,4,5,8, 10,12,14,16,18 is aimed only to easy-to-grasping, while the analitical sum thereof takes the form of complex mathematical series. See, for example:

Yu.A.Baurov "Space magnetic anisotropy and new interaction in nature", Physics Letters A, 181 (1993), p.283-288, Noth-Holland).

With the aid of the core 6, radial 7 and peripherical 8 parts of a closed magnetic circuit which concentrate and close magnetic lines of force originating from the magnetic source 11 in the local zone of space, i.e. in the inner cavity of closed magnetic circuit including the region 4 with lowered value of summed potential 3 ($\mathbf{A}_\Sigma$), the magnetic induction of the generator is also lowered with the essential part of magnetic field of generator 11 concentrated in the mass of elements 6,7 and 8 of closed magnetic circuit.

The material body, (in this case a rotor-ring 23) with part of it's mass (a half) is located in the zone 4 characterized by decreased values of both vector 3($\mathbf{A}_\Sigma$) and 9 (**B**), and initially drived up to speed, (with the aid of disc 32, rotated in the direction 33 by the shaft 37 joined mechanically through the clutch 39 to the system 40 of initial drive up of rotors), in the direction 24 about an axis being the same as the axis 10 of symmetry of the magnetic source 11 and being perpendicular to the plane in which vector 1 (**A**) of the magnetic potential of the generator and vector 2 ($\mathbf{A}_\Gamma$) of cosmo-logical potential are lying.

As a result, in the region 4 a force arises acting on the part of mass of material body 23 lying in said region 4 , which force is asymmetrical and has the major component parallel with the cosmological vector potential 2 ($\mathbf{A}_\Gamma$). In all other parts of space (p.5 of Fig.1-18) the summed potential 3 ($\mathbf{A}_\Sigma$) practically will not change, and the mentioned force will not act on the bodies or their parts located in the region 5 of space.

The force acting on the body 23 is the result of addition of great quantity of forces distributed between the elements of the body 23 and having different values according to particular position of those elements in the space region 23 and to velosity of their motion as well.

The resultant force of all forces acting on the body 23 and, simirlarly, on rotors 18,21,25 in the region 4 of lowered value of summed potential 3 ($\mathbf{A}_\Sigma$) is indicated in the drawing by the vector 27 (**F**).

The value of force 27 (**F**) acting on bodies in the region of lowered summed potential 3 ($\mathbf{A}_\Sigma$) depend on the value and the space distribution of vector potential 1 (**A**) induced by the magnetic source 11, i.e. on degree of caused by it diminishing of summed potential 3 ($\mathbf{A}_\Sigma$) and of its gradient, as on angular velocity of rotation of the body 23 (i.e. on the velocity of motion of mass in space region 4 with diminished summed potential 3 ($\mathbf{A}_\Sigma$)).

This is shown, for example, in the article: Yu.A.Baurov, "Space magnetic anisotropy and new interaction in nature", Physics Letters A 181 (1993), p.283-288, North-Holland, from the results of which the proportionality of force **F** to the complex series $\lambda(\Delta A)$ follows, that may be written as

$$\lambda(\Delta A) = (1 - V^{2/}C^2)^{1/2},$$

where $\Delta A$ is a nonlocal parameter equal the difference of changes of summed vector potential 3 ($\mathbf{A}_\Sigma$) at the point about which the body 23 rotates and at the point of location of body; C is light velocity, V is a velocity component of pair "neutrino-antineutrino" forming the inner space of elementary particles of which the object is composed; that component is directed along the vector $\mathbf{A}_\Gamma$.

If the mass 23 is moved in the said region of lowered value of summed potential 3 ($\mathbf{A}_\Sigma$), i.e. in region of existance of F, with some velocity $V_o$ in direction of $\mathbf{A}_\Gamma$, the series $\lambda(\Delta A)$ may be written as:

$$\lambda(\Delta A) = [1 - (V - V_o)^2/C^2]^{1/2},$$

where $V-V_o$ is a relative velosity of motion of pair "neutrino-antineutrino" and of the body 23 in the direction of vector $\mathbf{A}_\Gamma$. (The above written estimating formula is valid for $V_o \ll V$).

Thereof it follows that the value of force **F** increase with the increasing of velocity of mass 23 in the direction of vector $\mathbf{A}_\Gamma$.

The action of the force **F**, in particular, in the constructions of Fig. 1,2 leads to the rotation of body 23 about the axis 10 in direction 24, thereby the mechanical energy is generated.

For the wanted utilization or this mechanical energy the body 23 is driven initially up to the regime of free inertial rotation, i.e. up to the regime of zero moment of all outer forces about the center of inertia of the body. As is shown above, the force **F** increase with the increasing of angular velocity of the body 23, hence after the said zero moment is reached the further increasing of the angular velocity of body 23 takes place: In that regime the preliminary action of system 40 on body 23 driving it up to speed is removed off (the clutch 29 switched off), while to the rotating body 23 with the aid of disc 41, shaft 46 and clutch 48 the consumer of generated mechanical energy is joined up, for example, an electric generator, whose shaft come to rotation in the same direction as the disc 41. Because of diminished values of magnetic indication **B** in the regions 4,5, where the body 23 rotates, the energetic losses due to rotation effects of electrically conducting bodies in the magnetic field are excluded or are minimized (i.e. the losses concerned with the generation of potential difference as well as with the origin and flowing of electric current in the body, see e.d.

И.Е.Тамм "Основы теории электричества" (I.E.Tamm, "Basic principles of electricity")

"Nauka", Moscow, 1966, p.p.549-553).

In the final analysis, the reduction of the induction value in the region 4 and 5 allows us to increase performance of energy generating process as well as to eliminate rise of spontaneous going of it to the deceleration mode, i.e. to the regime of self-turning-off of the generator.

It should be noted that the origin of turning force **F** is not due to the existence of magnetic induction **B** in the region 4, but due to the vector potential **A**, taking place in this space region even in the absence of magnetic field, what ensure a positive effect of energy generation with minimal losses (See I.R.Walker, "Verification of the Aharonov-Bohm effect in superconductors by use of toroidal flux geometry", Physical Review, v.33, N 7, p.p.5028-5029 (1986)).

The magnetic induction of the generator in the region 4 may be reduced not only by concentration and closure of magnetic lines of force out of said region (in accordance with p.2 of Claims and with Fig. 1,2,6-8,13-18), but also by superimposing in the generator a number of magnetic fields with differently directed vectors of magnetic induction.

This last embodiment of the proposed "method" (See p.p. 3,4 Of Claims) may be realized, for example, (see Fig.3,4,9-12) by passing through the identically winded outer and inner 54 coils of the generator oppositely directed currents 51 ($I_{H.C.}$) and 55 ($I_{BH.C.}$), which produce in space two axially symmetrical magnetic fields with oppositely directed lines of force 52 and 56 as well as with oppositely directed magnetic induction vector 53 ($\mathbf{B}_{H.C.}$) and 57 ($\mathbf{B}_{BH.C.}$), respectively. The vector 58 ($\mathbf{B}_\Sigma$) of the summed magnetic field is equal to the sum of said vectors: $B_\Sigma = B_{H.C.} + B_{BH.C.}$

For generation of mechanical energy (see e.g. Fig.3,4) the rotor-disc 19 is driven initially up to speed by the system 40 joined mechanically with the rotor 19 through the intermediary of the shaft 36 and the clutch 39, up to the regime of zero moment of outer forces about a center of inertia of the body 19, thereafter the turning force is removed off by the clutch 23, and by the clutch 48 to the body 19 rotating in direction 20 a consumer 49 of the generated energy is joined.

As is shown experimentally (see

Ю. А. Бауров, Е. Ю. Клименко, С. И. Новиков, "Экспериментальное наблюдение магнитной анизотропии пространства"(Yu. A. Baurov, E. Yu. Klimenko, S. I. Novikov, "Experimental observation of space magnetic aniso-tropy")

Doklady Akademii Nauk SSSR, 1990, v.315, N 5, p.p. 1116-1120; Yu.A.Baurov, E.Yu.Klimenko, S.I.Novikov, "Experimental observation of space magnetic anisotropy", Phisics Letters A 162 (1992),p.p.32-34, North-Holland: Yu.A.Baurov, "Space magnetic anisotropy and new interaction in nature", Physics Letters A 181 (1993), p.p.283-288, North-Holland), the value of the force $F$ acting on bodies in the space region 4 depend not only on the absolute value of summed vector-potential $A_{\Sigma}$, on its gradient and on velocities of motion of body elements in said region, but also on location of a point, about which the absolute rotation of the body occurs, which force approach to maximum when the said body rotates about a momentary axis 29 (the point K in Fig.5), arranged at each moment of time on a surface 18, which surface set a limit on the space region 30 where the summed potential $A_{\Sigma}$ is minimal. As a rule the surface 18 coincide with outer side surface of magnetic source (See Figs.1-18).

In accordance with the p.5 of Claims such a mode of rotation of bodies may be realized technically by revolving these bodies around the surface 18 (See Fig.5).

Thereto the surface of the roller 21 is thrown into engagement (e.g. gears, or frictional) with the surface 18, the axis 17 of the rotor-roller 21 turned up to speed, is force-moved along a circumference 28 up to the regime of zero moment of outer-forces about the center of inertia of the body 21, thereafter the turning force is removed off and to the body 21 rotating in the direction 22 the consumer 49 of generated energy is joined.

The device, realizing the proposed method, works in the following manner.

In accordance with the first embodiment of the generator construction, which is shown in Fig.6-8, which is in agreement with p.p.6-13,23-27 of formula of the invention and which realizes the proposed method according to p.p.1,2,5 of Claims, by means of energizing magnetic source 11 of Fig.6, or by using a constant cylindrical magnet 13 with axial magnetization (See Figs.7,8), the magnetic field is created in the generator, with vector-potential A being arranged in planes lying perpendicular to the axis 10 of symmetry of the magnetic source.

The main part of magnetic induction $B$ 9 is concentrated in the core 6, in the pole pieces 14 and in peripherical elements of magnet circuit, i. e. in magnetically conducting units: hollow cylinder 15 of Fig.6 and rods 16 of Fig.7,8, so that in the interspace between the side surface 18 of the magnetic source and the peripherical elements 15,16 a zone will exist with the reduced value of magnetic induction of the generator.

Further the device is oriented so as to create in the above mentioned interspace, where totally or partially the bodies 19,21, 23,25 are located, a region 4 with reduced value of the summed potential $A_{\Sigma}$.

Practically it may be carried out by orienting the axis 10 of simmetry of the magnetic source 11,13 perpendicularly to the direction of cosmological vector-potential $A_{\Gamma}$, a right assention coordinate of which is equal to $270°+7°$, as is shown experimentally (See, e.g.

Ю. А. Бауров, Е. Ю. Клименко, С. И. Новиков, "Экспериментальное наблюдение магнитной анизотропии пространства"(Yu. A. Baurov, E. Yu. Klimenko, S. I. Novikov, "Experimental observation of space mag-netic anisotropy")

Doklady Akademii Nauk SSSR, 1990, v.315 N 5,p.p.1116-1120; Yu.A.Baurov, E.Yu.Klimenko, S.I.Novikov "Experimental observation of space magnetic anisotropy". Phisics Letters A 162 (1992), p.p.32-34, North-Holland; Yu.A.Baurov,"Space magnetic anisotropy and new interaction in nature", Physics Letters A 181 (1993), p.p.283-288, North-Holland).

As a result in the region 4 simultaneously the summed vector-potential $\mathbf{A}_\Sigma$(3) and the magnetic induction $\mathbf{B}$ of the generator are reduced.

The clutches 39 turned on, by means of systems 40 through the shafts 36,37,38 and the discs 31,32,34 the initial drive up to speed of the rotor-disc 19, of the rotor-ring 23 (Fig.6), of the rotor-separator 25 and mounted in it rotor-rollers 21 (Fig.7,8) in directions 26 and 22, respectively, is carried out, which rollers are revolving-therewith around the outer side surface 18 of magnetic source setting a limit on the space region with minimal summed potential $\mathbf{A}_\Sigma$.

Because of augmentation of the force $\mathbf{F}$, acting on rotors 19,23,21,25, with increasing of their speed of rotation after all the forces of resistance (of friction, of electrodynamics etc.) being overcome, the rotors go into the regime of free inertial rotation with further increase of their angular speed as well as of discs 43 or 41 and /or of shafts 45,46 (Fig.6), 47 (Fig.7,8). As a result the mechanical energy is generated.

With the aid of clutches 48 power take-off occurs from bodies 19,23,25,21 Fig.6,7) to the consumers at 49.

When the consumers 49 are joined, the additional forces arise in the device, which forces decelerate rotors 19,21,23,25. These forces are caused by power expenditure on unipolar generation of electrical energy, accompanying the mechanical energy generation and having the effectiveness which depend on the magnetic induction $\mathbf{B}$ in the region of location of rotating bodies and on their speed. Any changes in speed of rotation of rotors, for example, due to changes in load 49, lead to additional ("unipolar") energy losses in the device. The specially nonfavourably conditions take place for rotors-discs 19 of Fig.6 and for rotors-rollers 21 of Fig.7,8, which are in the region of gradient change of magnetic induction, therefore in the bulk of bodies electric currents will flow continuously with resulting losses even at constant speed of rotation of these rotors.

Yet because the construction of the first variant of the device ensure the concentration and the closure of lines of magnetic flux 9 by the mass of pole pieces 14 and of elements 15 (or 16) of magnet system, in the region 4, as is mentioned above, the magnetic induction is small. Hence, the generated energy losses are also small and the efficiency of the generation process is high.

In accordance with the second embodiment of the generator construction which is shown in Fig.3,4,9-12 corresponding to p.p.14-17, 23-27 of Claims and realizing the proposed method according to p.p.1,3-5 of Claims, by means of energizing an outer 50 and an inner 54 solenoids of magnetic source by oppositely directed currents $I_{H.C.}$ (51) and $I_{BH.C.}$ (55), respectively, the magnetic field is created in the generator, the vector-potential $\mathbf{A}$ of which lie in planes perpendicular to the axis 10 of symmetry of magnetic source.

Because of the differences in radial dimensions of the solenoids 50 and 54 as well as of the possibility of currents 51,55 being different in magnitude, in outer space of the side surface 18 of magnetic source a zone appear where the summed magnetic induction $\mathbf{B}_\Sigma$ of outer and inner solenoids is reduced.

Further the device is oriented in such a manner that in the said zone, where the material bodies 19,21,23,25 are positioned totally or partially, a region 4 be created with the diminished value of summed potential $\mathbf{A}_\Sigma$ (3).

That is carried out, as is mentioned above, by orienting the axis 10 of symmetry of magnetic source perpenducularly to the direction of the cosmological vector-potential $\mathbf{A}_\Gamma$ (2). As a result, in the region 4 the simultancous reducing of the summed vector-potential $\mathbf{A}_\Sigma$ as of the magnetic induction $\mathbf{B}_\Sigma$ takes plase.

The clutches 39 turned on, with the aid of systems 40 through the shafts 37,38 and the discs 32,34 (Fig.9-12) or by the shaft 36 directly (Fig.3,4), the initial drive-up to speed of the rotor-disc 19 in the direction 20 (see Fig.3,4), of the rotor-ring 23 in the direction 24 (Fig.9,10), of the rotor-separator 25 and mounted in it rotors -rollers 21 in the directions 26 and 22, respectively (Fig.11,12), is carried out, which rotors-rollers are therewith revolving around the outerside surface 18 of magnetic source, setting a limit on the space region with the minimum summed potential $\mathbf{A}_\Sigma$.

The force $\mathbf{F}$ acting on rotors 19,23,21,25 is augmented with increasing of their speed of rotation, thus after all the forces of resistance being overcome the rotors go into the regime of free inertial rotation with further increase of their angular speed as well as of discs 41,43 and /or of shafts 45 (Fig.3), 46 (Fig.9,10), 47 (Fig.11,12). As a result the mechanical energy is generated.

By means of clutches 48 power take-off occurs from bodies 19,23,25,21 (Fig.3,4,9,10,11,12) to the consumers 49.

As in the first variant of the generator construction, when the consumers 49 are joined, the additional forces arise in the device, which forces decelerate the rotors 19,21,23,25. As is said above, these forces are due to power expenditure on the unipolar energy generation accompanying the main process. Any changes in speed of rotation of said bodies lead to additional ("unipolar") energy losses in the device. As is mentioned above, the rotors-discs 19 of Fig. 3,4 and rotors-rollers 21 of Fig. 11,12 work under specially nonfavourable conditions, and in their masses electric currents flow continuosly with resulting energy losses.

Yet because the construction of the second variant of the generator ensure the reducing of the magnitude $\mathbf{B}_\Sigma$ of the summed magnetic field in the region 4 due to addition of two axially symmmetric magnetic fields with oppositely directed vectors 53 and 57 of magnetic induction, thus the mentioned losses of generated energy are small, and the efficiency of the generation process is sufficiently high.

In accordance with the third embodiment of the generator, which is shown in Fig.13-18, which is made in agreement with p.p.18-27 of Claims, and which realizes the proposed "Method..." according to p.p.1,2,5 of the Claims, by means of energizing by current $I_T$ (62) a toroidal coil 59 or its elements 60,61 of Fig.17,18, the magnetic field is created in the generator, the vector-potential **A** (1) of which lie in planes perpendicular to the axis 10 of symmetry of the magnetic source, which planes are determined by axial cross-sections of the toroid 59 (of its sections 60,61).

As in the toroid the magnetic field with an induction $\mathbf{B}_T$ is totally located inside its volume, in its outside space a zone with zero induction $\mathbf{B}_T$ is created, and the vector-potential **A** has the specific value (See I.R.Walker, "Verification of the Aharonov-Bohm effect in superconductors by use of toroidal flux geometry", Physical Review, v.33, N 7, p.p.5028-5029 (1986)), which may be measured, in particular, by means of superconducting quantum interference device (SQVIDs).

Further the device is oriented so that in said zone outside of the toroidal surface 18 of the magnetic source, where the bodies 19,21,23,25 are located totally or partially, region 4 with the diminished summed potential $\mathbf{A}_\Sigma$ be created.

This is carried out by orienting the tangent 66 to axis 10 of symmetry of toroid 59 (sections 60,61) being parallel with the axis 17 of rotation of rotors (Fig. 13,15), perpendicularly to the direction of cosmological vector-potential $\mathbf{A}_\Gamma$ (2), or, identically, by orienting the plane of toroidal cross-sections 64 (or of its sections 60,61), which is perpendicular to, at least, one of the rotational axis of bodies-rotors, in parallel to said cosmological vector-potential $\mathbf{A}_\Gamma$.

As a result, in the region 4 the reduction of summed vector-potential 3 ($\mathbf{A}_\Sigma$) occurs, and the induction $\mathbf{B}_T$ (63) is practically zero.

The clutches 39 turned on, with the aid of systems 40 through the shafts 37,38 and the discs 32,34 (Fig.15-17), or by the shaft 36 directly (See Fig.13,14), the initial drive-up to speed of the rotor-disc 19 (Fig.13,14) in the direction 20, of the rotor-ring 23 in the direction 24 (Fig.15,16), of the rotor-separator 25 and mounted on it rotors-rollers 21) Fig.17.18) in directions 26 and 22, respectively, is carried out, while the rotors-rollers are therewith revolving around the outside surface 18 of magnetic source setting a limit on the space region with the minimum summed potential (3) $\mathbf{A}_\Sigma$.

Further, as in the first and the second embodiments of the proposed method the rotating rotors go to into the regime of free inertial rotation with further increase of speed, so that the mechanical energy is generated.

By means of clutches 48 power take-off occurs from bodies 19,23,25,21 (Fig.13,15,17) to the consumers 49.

Unlike the first and the second variants of generator construction, according to it's third variant the magnetic field is totally concentrated in the inner space of toroid 59 (sections 60,61), i.e magnetic lines of force are closed within the toroid, thus when rotors 19,21,23,25 are functioning, additional deceleration forces, due to energy expenses on unipolar generation do not develop. As a result, the third embodiment of the present invention is loss-free and the efficiency of generation process is high.

With the all three embodiments of the present invention the bodies 19,21,23,25 are made, totally or partially, of a substance with considerably high density, no less than 8000 kg/m$^3$, for example, of tantalum. This give us the opportunity to increase number density of particles, on which the force **F** (27) acts and hence to reduce overall dimensions of the generator, or, with the same dimensions, to increase force and power characterictics.

While the particular embodiments of the present invention have been shown and decribed, it will be obvious to those skilled in the art that changes and modifications may be made without departing from this invention in its broader aspects and, therefore, the aim in the appended claims is to cover all such changes and modifications as fall within the true spirit and scope of this invention.

## Claims

1. The mechanical energy generation method comprizing creating the magnetic field in the generator with a vector potential 1 (**A**), oriented at an angle of 90°- 270° relative to the cosmological vector potential 2 ($\mathbf{A}_\Gamma$) and placeing and moving material bodies 19,21,23,25 joined to mechanical energy consumers 49, in a region 4 of reduced values of the vector potential 3 ($\mathbf{A}_\Sigma$) being equal to the sum of said values of vector potentials 1 (**A**) and 2 ($\mathbf{A}_\Gamma$),
   **wherein**
   the magnetic induction 9 (**B**) of the generator is reduced in a local zone of region 4, and the bodies 19,21,23,25 are placed, at least partially, in said local zone and are, by rotating them initially, driven up to speed about axes 10, 17, perpendicular to planes of lay-out of vectors 1 (**A**) and 2 ($\mathbf{A}_\Gamma$), up to reaching by each of the bodies 19,21,23,25 the regime of zero moment of external force with respect to the center of inertia, after which the initial torque is removed and to the rotating bodies 19,21,23,25 the mechanical energy consumers 49 are joined.

2. The method of claim 1, wherein the magnetic induction of the generator in a local zone of the region 4 with reduced values of the vector potential 3 is reduced by means of magnetic lines of force concentration and closure outside of said zone.

3. The method of claim 1, wherein the magnetic induction 3 is reduced by superimposing in the generator several oppositely directed magnetic fields.

4. The method of claim 3, wherein the magnetic induction 58 of the generator is reduced by superimposing two axially simmetric magnetic fields 52,56 with oppositely directed vector 53 ($\mathbf{B}_{H.C.}$), 57 ($\mathbf{B}_{BH.C.}$) of magnetic induction.

5. The method of claims 1-4, wherein the rotation of bodies 21 is carried out by means of revolving them around a surface 18, which envelops the space region 30 where the summed potential 3 is minimal.

6. The mechanical energy generator including a magnetic system and material bodies 19,21,23,25
   **wherein**
   the magnetic system is made as an axially simmetrical magnetic source 11,13 with a core in the form of pole pieces 14 mounted on the poles, said pole pieces extending radially relative to the axis 10 of said magnetic source and joined together peripherically; the bodies 19,21,23,25 are made in the form of rotors joined mechanically to systems 40 of initial drive them up to speed and to mechanical energy consumers 49; said rotors being made as bodies of revolution at least part of the mass of which positioned in an interspace 4 between the side surface 18 of the magnetic source 11,13 and the elements 15,16 joining together peripherically the pole pieces 14, therewith the axes 10,17 of rotors being parallel to the axis 10 of symmetry of said magnetic source.

7. The generator of claim 6, in which the magnetic source is made in the form of constant cylindrical magnet 13 axially magnetized.

8. The generator of claim 6, in which the magnetic source is made in the form of solenoidal current coil 11.

9. The generator of claims 6-8, in which the elements joining each to other the pole pieces 14 of the magnetic system are made as magnetically conducting hollow cylinders 15 positioned coaxially with the magnetic source 11,13.

10. The generator of claims 6-8, in which the elements joining each to other the pole pieces 14 of the magnet system are made in the form of a set of magnetically conducting rods 16 positioned at the periphery of said pole pieces 14.

11. The generator of claims 6-8 provided with rotor 19,21 axes 17 of which are arranged in an interspace 4 between the side surface 18 of the magnetic source 11,13 and the elements 15,16, joining together the pole pieces 14 of the generator magnet system.

12. The generator of claims 6-8, provided with rotors 23,25, axes of which are arranged on the axis 10 of symmetry of the magnetic source 11,13.

13. The generator of claims 12, in which at least part of rotors are made as rings 23 around the outer side surface 18 of the magnetic source 11,13.

14. The generator of mechanical energy including a magnet system and bodies 19,21,23,25,
    **wherein**
    the magnet system is made in the form of two coaxial axially symmetrical solenoids 50,54, and the bodies 19,21,23,25 are made as rotors mechanically joined to systems 40 of initial drive-up of said rotors and to mechanical energy consumers 49; said rotors being made in the form of bodies of revolution having the axes 10,17 parallel with the axis 10 of symmetry of solenoids.

15. The generator of claim 14, in which the axes 17 of rotors 19,21 are arranged at the outer surface of the external solenoid 50.

16. The generator of claim 14, provided with rotors 23,25, axes of which are arranged on the axis 10 of symmetry of solenoids 50,54.

17. The generator of claim 16, in which at least part of rotors are made as rings 23 around the external solenoid 50.

18. The mechanical energy generator including a magnet system in the form of toroidal current coil 59 and material bodies 19, 21,23,25,
    **wherein**
    the said bodies are positioned outside the toroid 59 and are made as rotors joined mechanically to systems 40 of initial drive them up to speed and to mechanical energy consumers 49; said rotors being made in the form of bodies of revolution, axes 10,17 of which arranged perpendicularly to planes of axial cross-sections 64 of the toroid.

19. The generator of claim 18, in which the toroidal current coil is made in the form of separate straight sections 60 the changes of which being eased with transition curvilinear adapters 61.

20. The generator of claim 18 provided with rotors 19,21 axes 17 of which are arranged in the interspace 4 outside of toroidal surface 18.

21. The generator of claim 18, provided with rotors 23,25 axes of which are going through the centers 65 of toroid axial cross-sectionss 64.

22. The generator of claim 21, in which at least part or rotors are made in the form of rings 23 around the toroid 59, in its dial cross-sections 64.

23. The generator of claims 13,17,22, in which the ring rotors are made in the form of separators 25 with additional rotors 21 set up therein, the outer surface of which rotors being thrown into-engagement with the outer side surface 18 of magnetic source.

24. The generator of claim 23, in which the additional rotors 21 are made in the form of cylinders mounted with the possibility of rotation in the separator 25.

25. The generator of claim 23, in which for mechanical engagement gear is used.

26. The generator of claim 23, in which for mechanical engagement friction is used.

27. The generator of claims 6,14,18, in which at least a part of the mass of rotors 19,21,23,25 is made of a substance with the density no less than 8000 kg/m$^3$, for instance, of tantalum.

**Amended claims**

1. The generator of claim 23, in which at least a part of the mass of the additional rotors 21 is made as cylindrical axially magnetized permanent magnets.

FIG. I

Schnitt C-C

FIG. 2

FIG. 3

Schnitt E-E

FIG. 4

FIG. 5

FIG. 6

FIG. 7

Schnitt H-H

FIG. 8

FIG. 9

Schnitt K-K

FIG. 10

FIG. II

EP 0 716 498 A1

Schnitt. M-M

FIG. 12

28

FIG. 13

Schnitt P_P

(vergrößert)

27    2         4    3    19        59    62

65

$\vec{F}$    $\vec{A_r}$

$\vec{A_x}$

$\vec{A_r}$

I    36              20    64    5    18    2

FIG. I4

FIG. 15

Schnitt T-T
(vergrößert)

FIG. 16

FIG. 17

Schnitt X-X
(vergrößert)

FIG. 18

34

## INTERNATIONAL SEARCH REPORT

| International application No. |
|---|
| PCT/RU 94/00135 |

**A.   CLASSIFICATION OF SUBJECT MATTER**

Int. Cl.$^6$    H02N 11/00, H02K 16/00

According to International Patent Classification (IPC) or to both national classification and IPC

**B.   FIELDS SEARCHED**

Minimum documentation searched (classification system followed by classification symbols)

Int. Cl.$^5$    H02N 11/00, H02K 16/00-16/08, H02K 53/00, G01R 1/06-11/14

Documentation searched other than minimum documentation to the extent that such documents are included in the fields searched

Electronic data base consulted during the international search (name of data base and. where practicable. search terms used)

**C.   DOCUMENTS CONSIDERED TO BE RELEVANT**

| Category* | Citation of document, with indication, where appropriate, of the relevant passages | Relevant to claim No. |
|---|---|---|
| A | FR, A1, 2417204 (BAUD BARTHELEMY), 7 September 1979 (07.09.79), figures 3, 4, pages 5-7 | 1-3 |
| A | EP, A2, 0038120 (HIROE, TSUNEO), 21 October 1981 (21.10.81), the abstract, figure 4, the claims 1-3 | 4,5,7, 23-25 |
| A | EP, A1, 0287182 (ZIELINSKI,ADOLF HERBERT ASTOR), 19 October 1988 (19.10.88), figures 11, 12, columns 5, 6 | 7,14 |
| A | US, A, 4221984 (ELMER B.MASON), 9 September 1980 (09.09.80), figures 1-4, columns 3,4 | 6,8,10,11 15 |
| A | GB, A, 2117083 (MATSUSHITA ELECTRIC WORKS LTD.), 5 October 1983 (05.10.83), the abstract | 24,26 |

./.

| ☐ Further documents are listed in the continuation of Box C. | ☐ See patent family annex. |
|---|---|

* Special categories of cited documents:

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents. such combination being obvious to a person skilled in the art

"&"  document member of the same patent family

| Date of the actual completion of the international search | Date of mailing of the international search report |
|---|---|
| 25 December 1994 (25.12.94) | 12 January 1995 (12.01.95) |

| Name and mailing address of the ISA/RU | Authorized officer |
|---|---|
| | |
| Facsimile No. | Telephone No. |

Form PCT/ISA/210 (second sheet) (July 1992)

**INTERNATIONAL SEARCH REPORT**

| International application No. |
| --- |
| PCT/RU 94/00135 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | US, A, 3962632 (GENERAL ELECTRIC COMPANY) 8 June 1976 (08.06.76), figures 1, 2, columns 1-8 | 18-20 |
| A | FR, A1, 2460064 (PORTESCAP), 16 January 1981 (16.01.81), figure 1, page 2 | 7,9,12,13, 16,17 |

Form PCT/ISA/210 (continuation of second sheet) (July 1992)